# FASCICULE DE BREVET EUROPEEN

(11) **EP 2 031 271 B1**
(45) Date de publication et mention de la délivrance du brevet: **21.03.2012**
(21) Numéro de dépôt: 08159521.7
(22) Date de dépôt: 02.07.2008
(51) Int. Cl.: F16F 15/131, F16F 15/315

(54) **Volant Flexible**
Verstellbares Lenkrad
Flexible flywheel

(30) Priorité: 29.08.2007 FR 0757251
(43) Date de publication de la demande: 04.03.2009
(73) Titulaire: Valeo Embrayages, 80009 Amiens (FR)
(72) Inventeur: Verhoog, Roel, 60190, Gournay Sur Aronde (FR)
(74) Mandataire: Jeuland, Mickaël

(56) Documents cités:
- EP-A- 1 568 915
- WO-A-85/01547
- FR-A- 2 849 683
- FR-A- 2 852 650
- GB-A- 1 153 305

## Description

L'invention concerne un volant flexible dans un dispositif de transmission de couple, en particulier pour véhicule automobile.

De façon connue, un volant flexible comprend une tôle annulaire flexible dont la partie centrale est fixée par des vis sur l'extrémité d'un arbre moteur, tel que le vilebrequin d'un moteur à combustion interne de véhicule automobile, et dont la périphérie est solidaire d'une masse d'inertie annulaire. La partie centrale de la tôle flexible est appliquée sur l'extrémité de l'arbre moteur par une cale circulaire comportant des alésages de passage des vis de fixation de la tôle flexible, cette cale permettant de répartir d'une part les contraintes exercées par les vis sur la tôle flexible lors du transfert de couple et d'autre part les contraintes dues aux flexions de la tôle.

La cale est réalisée en acier qui est traité, au moins sur la face coopérant avec les têtes des vis, est obtenue par découpage à la presse et est dans certains cas rectifiée, de sorte qu'elle a un coût non négligeable. WO 85/01547 divulgue le préamble de la rev. 1, FR 2849683 divulgue un volant réalisé en fonte en une pièce.

La présente invention a notamment pour but de réduire le coût d'un tel volant flexible.

Elle propose à cet effet un volant flexible d'un dispositif de transmission de couple, destiné à être monté en bout d'un arbre moteur et comprenant une tôle annulaire flexible, une masse d'inertie annulaire solidaire de la périphérie externe de la tôle flexible et une cale centrale destinée à fixer la tôle flexible au moyen de vis sur l'extrémité de l'arbre moteur, caractérisé en ce que la cale est en fonte et est formée de la partie centrale de la masse d'inertie annulaire.

L'invention permet d'abaisser notablement le coût du volant flexible.

De plus la cale en fonte étant issue de la: découpe de la partie centrale de la masse d'inertie annulaire, le même moule peut être utilisé pour la fabrication d'un volant rigide (c'est-à-dire à partie centrale non découpée) et pour la fabrication d'un volant flexible (à partie centrale découpée), ce qui se traduit par des gains supplémentaires en termes de nombre de moules, d'amortissement des moules, de logistique, etc.

De façon générale, l'invention s'applique à tous les volants moteurs flexibles des dispositifs de transmission de couple et notamment aux volants d'inertie simples, aux volants primaires des doubles volants amortisseurs et aux convertisseurs de couple à masse d'inertie rapportée en fonte.

L'invention sera mieux comprise et d'autres caractéristiques, détails et avantages de celle-ci apparaîtront plus clairement à la lecture de la description qui suit, faite à titre d'exemple en référence aux dessins annexés dans lesquels :
La figure 1 est une vue schématique de côté d'un volant d'inertie en fonte ;
La figure 2 est une vue schématique de côté de ce volant dont la partie centrale a été découpée ;
La figure 3 est une vue schématique de côté d'un volant d'inertie selon l'invention.

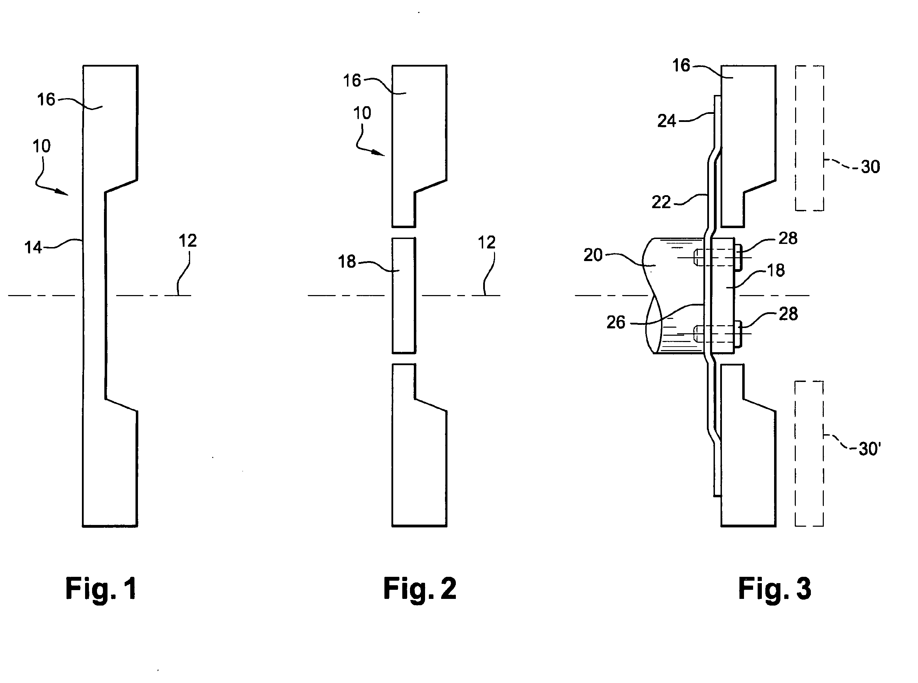

Le volant d'inertie 10 représenté en figure 1 est une pièce annulaire réalisée en fonte, par exemple en fonte à graphite lamellaire ou à graphite sphéroïdal, et présente une symétrie de révolution autour d'un axe 12.

Sa partie centrale 14 a une épaisseur sensiblement constante, inférieure à celle de sa partie périphérique externe 16.

Selon l'invention, la partie centrale du volant d'inertie 10 est découpée selon un contour circulaire centré sur l'axe 12, pour l'obtention d'une cale circulaire 18.

Cette cale 18 va être utilisée pour la fixation d'un volant flexible en bout d'un arbre moteur 20, comme représenté en figure 3, le volant flexible étant constitué d'une tôle annulaire flexible 22 dont la périphérie externe 24 est rendue solidaire de la partie périphérique externe 16 du volant 10, par soudure ou au moyen de vis ou analogues.

La partie centrale 26 de la tôle flexible 22 est serrée et fixée sur l'extrémité de l'arbre moteur 20 au moyen de vis 28 qui sont engagées dans des alésages de la cale 18 et de la partie centrale 26 de la tôle flexible et qui sont vissées dans des orifices taraudés de l'extrémité de l'arbre 20.

La cale 18 a typiquement une épaisseur d'au moins 4mm, par exemple de 6 mm, quand elle est réalisée en fonte à graphite lamellaire et d'au moins 2 mm quand elle est en fonte à graphite sphéroïdal, pour bien répartir les contraintes exercées par les vis 28 sur la partie centrale 26 de la tôle flexible en fonctionnement et bien répartir régalement les contraintes dues aux flexions de la tôle,

Dans une variante de réalisation, la cale 18 est formée, non par découpe de la partie centrale du volant d'inertie 10. mais par découpe de la partie centrale d'une autre pièce en fonte utilisée dans la transmission d'un couple entre l'arbre moteur 20 et un élément tel, par exemple, que l'arbre d'entrée d'une boîte de vitesses.

Cette autre pièce annulaire en fonte peut être le volant d'inertie secondaire 30 d'un double volant amortisseur lorsque le volant d'inertie flexible 16, 22 constitue le volant primaire de ce double volant amortisseur, le volant secondaire 30 étant représenté en trait fantôme en figure 3.

Dans une autre variante, la cale 18 peut être constituée par la partie centrale découpée d'un plateau de pression d'un mécanisme d'embrayage associé au volant d'inertie flexible 16, 22, ce plateau de pression 30' représenté en trait fantôme en figure 3 étant destiné à serrer les garnitures d'un disque de friction sur la masse d'inertie annulaire 16, d'une façon bien connue de l'homme du métier.

Dans tous les cas, l'épaisseur de la cale 18 est semblablement égale à l'épaisseur de la partie périphérique interne de la masse d'inertie 16 ou du volant secondaire 30 ou du plateau 30' du mécanisme d'embrayage, respectivement.

## Revendications

1. Volant flexible d'un dispositif de transmission de couple, destiné a être monté en bout d'un arbre moteur (20) et comprenant une tôle annulaire flexible (22), une masse d'inertie annulaire (16) solidaire de la périphérie externe de la tôle flexible et une cale centrale (18) destinée à fixer la tôle annulaire (26) au moyen de vis sur l'extrémité de l'arbre moteur (20), **caractérisé en ce que** la cale (18) est en fonte et est formée de la partie centrale découpée de la masse d'inertie annulaire (16).

## Claims

1. Flexible flywheel of a torque transmission device, which is designed to be fitted on the end of a drive shaft (20) and comprises a flexible annular plate (22), an annular inertia mass (16) which is integral with the outer periphery of the flexible plate, and a central wedge (18) which is designed to secure the annular plate (26) by means of screws onto the end of the drive shalt (20), **characterised in that** the wedge (18) is made of cast iron, and is formed by the cut-out central part of the annular inertia mass (16).

## Patentansprüche

1. Flexibles Schwungrad einer Drehmomentübertragungsvorrichtung, das dazu bestimmt ist, am Ende einer Antriebswelle (20) montiert zu werden, und das ein flexibles ringförmiges Blech (22), eine mit dem äußeren Umfang des flexiblen Blechs verbundene ringförmige Schwungmasse (16) und eine zentrale Abstützung (18), die dazu bestimmt ist, das ringförmige Blech (26) mittels Schrauben am Ende der Antriebswelle (20) zu befestigen, umfasst, **dadurch gekennzeichnet, dass** die Abstützung (18) aus Gusseisen und aus dem aus der ringförmigen Schwungmasse (16) herausgeschnittenen zentralen Teil geformt ist.
